# EUROPEAN PATENT SPECIFICATION

(11) **EP 1 837 120 B1**
(45) Date of publication and mention of the grant of the patent: **09.07.2008**
(21) Application number: 06425178.8
(22) Date of filing: 16.03.2006
(51) Int. Cl.: B23K 37/047, B23K 37/04, B62D 65/02, B23P 19/04, B62D 65/18, B23K 31/02, B23K 101/00

(54) **Welding station for motor-vehicle bodies or sub-assemblies thereof comprising bottom liftable and side movable frames interconnected with cams**
Schweissstation für PKWs oder untere Teile von PKWs mit unterer anhebbarer Rahmung und seitlichen bewegbaren Rahmungen verbunden durch einem Nockensystem
Station de soudage pour véhicules à moteurs ou sous ensembles de tels véhicules comprenant un cadre inférieur soulevable et des cadres latéraux déplaceables interconnecté au travers de cames

(43) Date of publication of application: 26.09.2007
(73) Proprietor: COMAU SpA, 10095 Grugliasco (Torino) (IT)
(72) Inventor: Monti, Denny, 10093 Collegno (Torino) (IT); Bossotto, Piero, 10146 Torino (IT)
(74) Representative: Notaro, Giancarlo

(56) References cited:
- EP-A- 0 976 491
- US-A- 4 659 895
- US-A1- 2003 000 804
- US-B1- 6 344 629

## Description

The present invention relates to welding stations for motor-vehicle bodies or sub-assemblies thereof, of the type indicated in the preamble of claim 1 (see, for example, US 6 344 629 B1).

Welding stations of this type are known from US 6 344 629 B1, US 4 659 895 and EP 0 976 491 A1.

The purpose of the present invention is to provide a welding station of the type referred to above that will have an extremely simple and functional structure.

In order to achieve said purpose, the subject of the present invention is a welding station having the features of claim 1.

The invention will now be described with reference to the annexed plate of drawings, which are provided purely by way of non-limiting example, and in which:
- Figure 1 is a schematic perspective view of a preferred embodiment of the welding station according to the invention in the open condition of the two side frames;
- Figure 2 is a perspective view of the station according to the invention that illustrates the two side frames in their closed, operative, condition;
- Figures 3 and 4 are schematic front views of a detail of the welding station of Figures 1 and 2, in the open position and in the closed position of one of the two side frames;
- Figures 5, 6, and 7 are partial side views of the welding station according to the invention that illustrates three different operating steps; and
- Figures 8 and 9 illustrate a schematic perspective view of a detail of the welding station according to the invention in two different operating conditions.

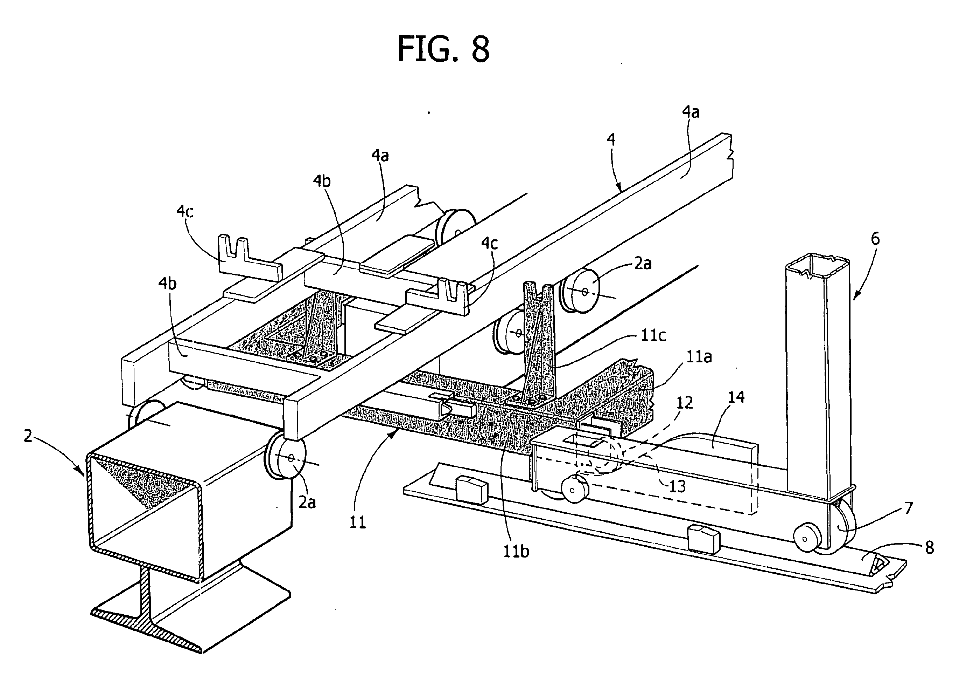

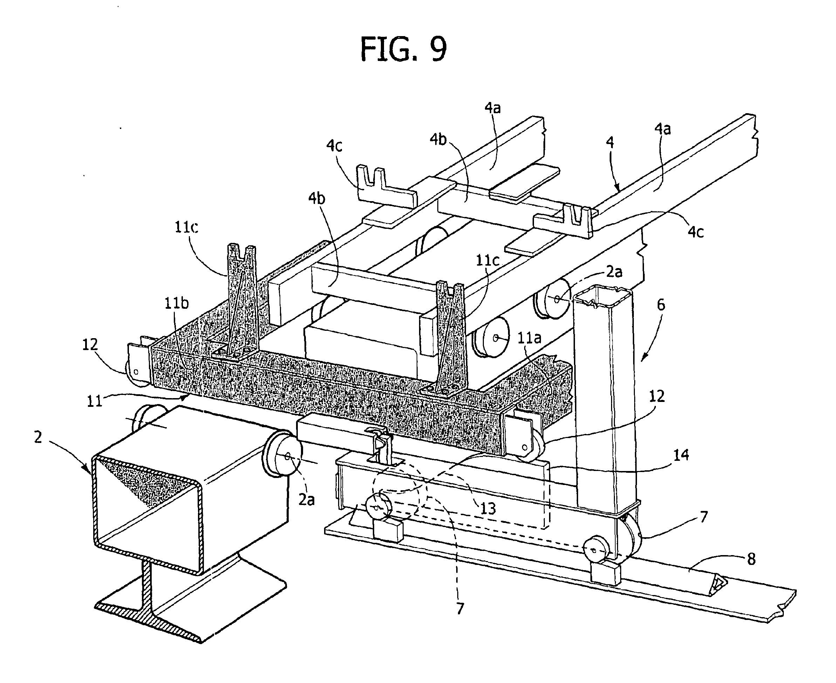

In the plate of drawings, the reference number 1 designates as a whole a tack-welding station of a motor-vehicle body. The station 1 is traversed by a conveying line 2, which moves the bodies to be welded within the welding station 1 and the welded bodies outside the welding station 1. The motor-vehicle body, designated as a whole by the reference number 3, is made up of a plurality of elements of pressed sheet metal. Prior to welding, upstream of the station 1, the various parts of the body 3 are pre-assembled in an unstable way, according to a technique in itself known, for example making use of tabs of bent sheet metal. The bodies 3 to be welded reach the station 1 and come out once they have been welded thereby conveyed along the line 2. The conveying line 2 can be made in any one of various known ways. The example illustrated in the drawings relates to the case of a line with a plurality of motor-driven rollers 2a, controlled, in a way in itself known, by one or more motors and corresponding drives (not visible in the drawings). The structure of each body 3 rests on a bottom skid 4, which, in the example illustrated, is made up of a low-cost simple frame and includes two parallel longitudinal members 4a joined by cross members 4b (see Figures 8 and 9) provided with supports 4c.

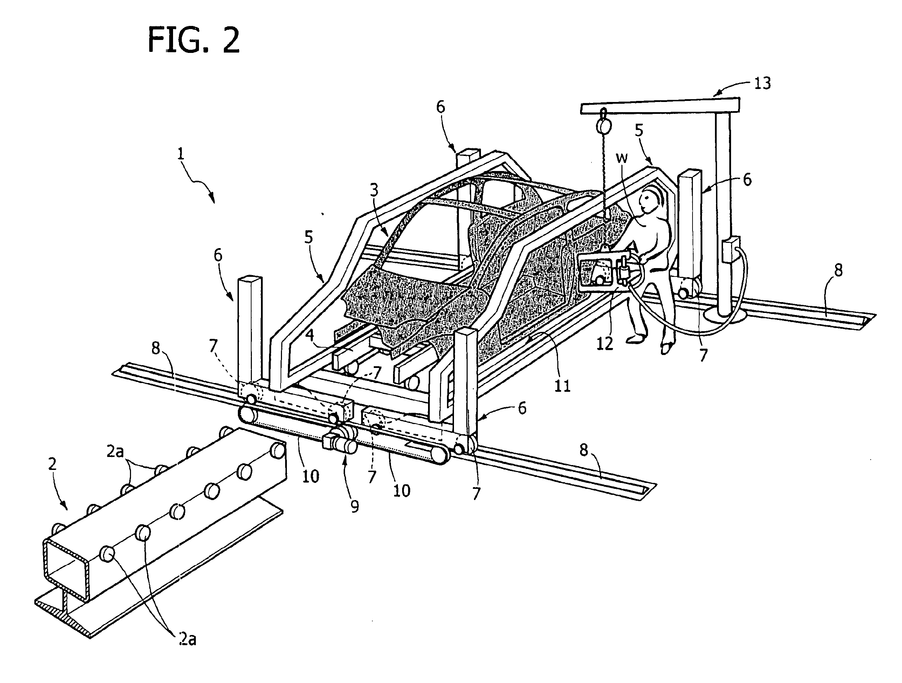

When the body to be welded is in the welding station 1 (see Figure 2), the various parts that make it up are referenced and clamped in the correct welding position by means of a plurality of devices for referencing and clamping (not visible in the drawings) carried by two side frames 5 for referencing and clamping, arranged at the two sides of the line 2. The aforesaid devices for referencing and clamping are of any type in itself known and are not illustrated in the drawings, in order to render the latter simpler and easier to understand.

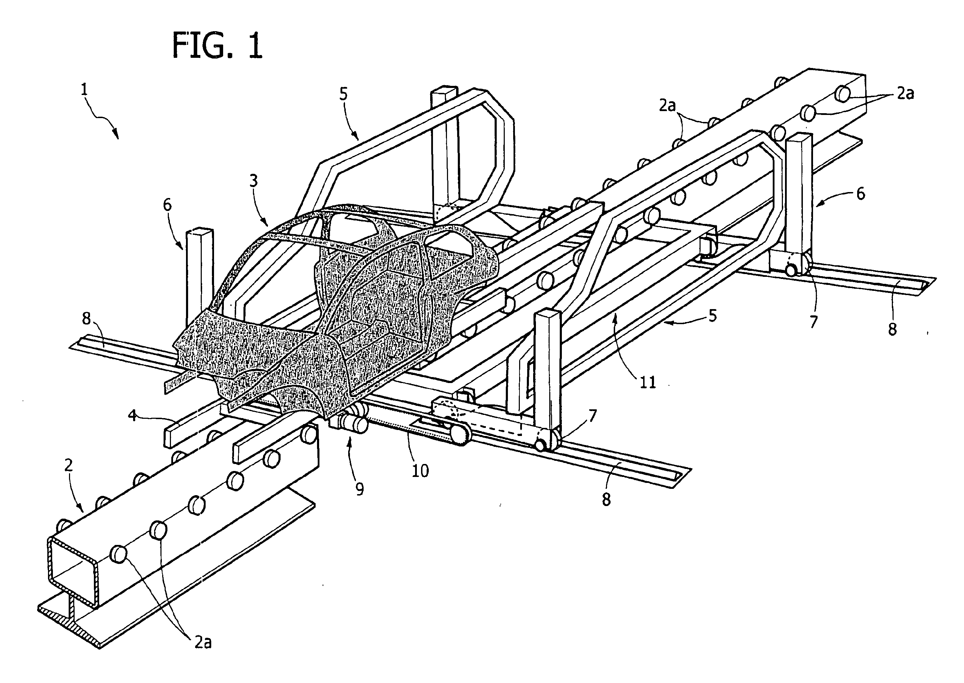

The two side frames 5 for referencing and clamping are carried by respective supporting structures 6 that are mobile in a direction transverse to the line 2 between an open position (where they are set at a greater distance apart from one another) visible in Figure 1, and a closed position (where they are set closer to one another) visible in Figure 2. In the open position of the side frames 5, visible in Figure 1, it is possible to proceed to replacement of the body 3 that is in the welding station, bringing the previously welded body out of the station and introducing a body to be welded into the station.

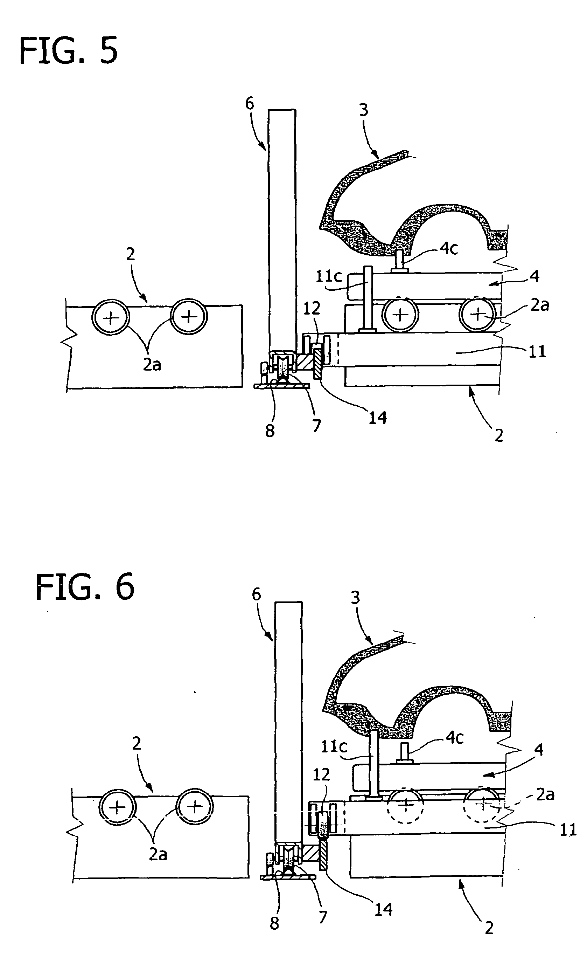

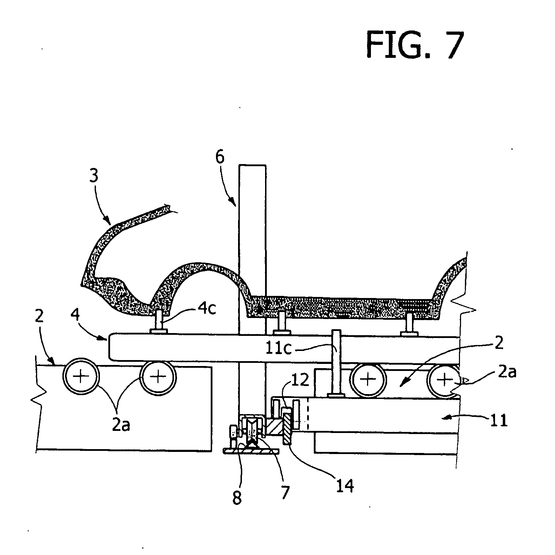

In the example illustrated, the supporting structures 6 of the side frames 5 are provided with wheels 7 guided on transverse rails 8 fixed to the floor. Figures 5-7 show how, in the case of the example illustrated, each rail 8 presents a profile shaped like a V set upside down, and the wheels 7 present a complementary profile, so as to prevent any undesirable movement of each wheel in a direction transverse to the rail.

In the case of the example illustrated, the movement of mutual approach and of mutual recession of the two supporting structures 6 of the side frames 5 is controlled by a motor-reducer assembly 9 designed to set in motion two endless belts 10 arranged in a direction transverse to the line. The top branches of the two belts 10 include an attachment element (not visible in the drawings), which is mobile with the belt and is connected to a respective structure 6. Activation of the motor-reducer assembly 9 causes translation of the attachment element associated to each top branch of the belts 10 between two end positions, corresponding respectively to the open position (Figure 1) and to the closed position (Figure 2) of the side frames 5.

When a body to be welded arrives within the welding station 1, a bottom frame 11 for referencing and support of the body, designated in the drawings with the reference number 11, is raised, coming into contact with the platform and raising it from the skid 4 that previously supported it.

Figures 8 and 9 are partial perspective views of the aforesaid bottom frame 11. This has two longitudinal members 11a joined by cross members 11b. The frame 11 is provided with sectional supports 11c for supporting and referencing the body to be welded in position.

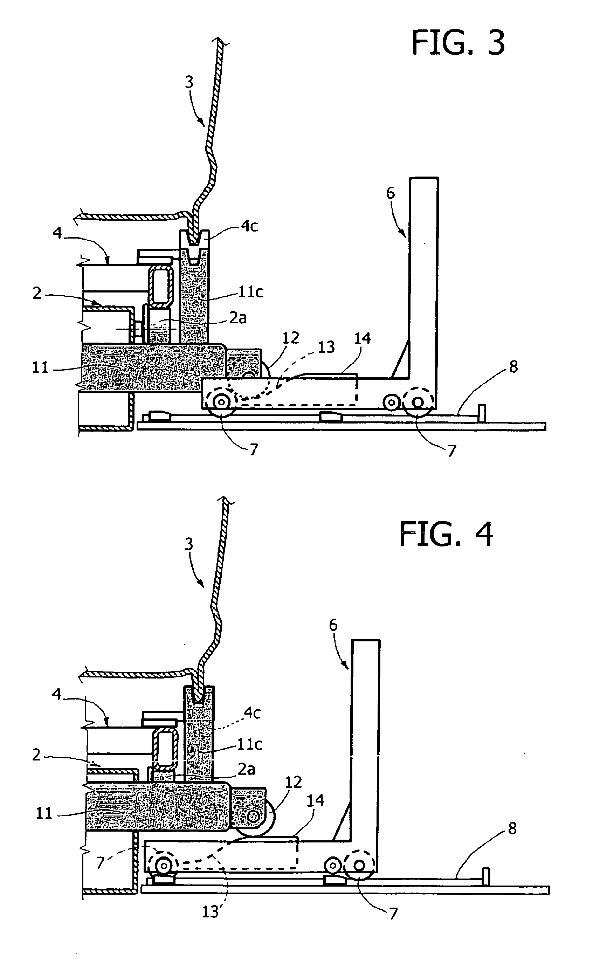

The bottom frame 11 at each of its ends is provided with wheels 12 designed to co-operate with cam paths 13 carried by plates 14 rigidly connected to the supporting structures 6 of the side frames 5. The cam paths 13 are shaped in such a way that the movement of the two frames 5 from the open position to the closed position causes rising of the wheels 12 along the cam paths 13 and consequent raising of the bottom frame 11. In this way, the bottom frame 11 is raised, receiving thereon the body 3 and raising it with respect to the skid 4 (see Figures 3 and 5, which illustrate the bottom frame in a lowered condition, and Figures 4 and 6, which illustrate the bottom frame 11 in the raised position).

Consequently, in the welding station according to the invention, it is the two side frames 5 which, by approaching one another, bring about raising of the bottom frame 11. Instead, when the two side frames 5 are brought into their open position, the bottom frame 11 returns into its lowered position, and the body is again taken up by the skid 4.

When the two side frames 5 are in their closed condition, they are thus held by an actuator device 30 that governs engagement of a clamping member 31 carried by a fixed structure, within a seat 32 of a respective structure 6 (see Figures 8 and 9).

Operation of the welding station referred to above is described in what follows.

The conveying line 2 carries in succession a series of bodies 3 to be welded, preliminarily assembled in an unstable way. When it is necessary to introduce a body to be welded into the welding station, the side frames 5 are in the open condition illustrated in Figure 1. In said condition, the body is stationary with its skid 4 between the two side frames 5. At this point, the motor assembly 9 is activated to bring about mutual approach of the two side frames 5 into the position illustrated in Figure 2. As described above, following upon said movement, there occurs also a raising of the bottom frame 11, which takes up the body 3 separating it from the corresponding skid 4. In said condition, the various devices for referencing and clamping carried by the two side frames 5 (not visible in the drawings) are activated for clamping the various parts of the structure to be welded in the correct welding position. At this point, it is possible to carry out welding of the parts making up the body. In the example illustrated, said welding is performed manually by one or more operators W who actuate respective welding guns 12, for example supported by tooling 13, for greater convenience of the operators.

Of course, the manual welding illustrated herein by way of example is typical in a case such as that of the welding system according to the invention, the primary advantage of which is that of an extreme simplification and hence of a reduced cost of the system. This does not, however, detract from the fact that the invention can be applied also to plants equipped with automatic welding systems, for example, provided with welding heads carried by programmable robots. In theory, the invention is also applicable to systems that make use of assembly techniques other than electric welding: for example, laser welding.

Once welding of the body has been completed, the clamping devices carried by the side frames 5 are disengaged from the body, the two side frames 5 are brought back into their open position, in which the bottom frame 11 returns to its lowered position, and the body is again deposited on the respective skid 4, which can thus be transferred out of the welding station (Figure 1).

The welding station described above is of a rigid type, i.e., suitable for operating on a specific type of body. Each particular model of body involves in fact a different conformation of the clamping devices carried by the two side frames 5. However, in conformance with a principle which has been proposed by the present applicant by now for various decades, the welding station can also be created so as to be flexible; i.e., it can be designed to operate on different models of body. In this case, different pairs of side frames 5 are envisaged for the different models on which it is necessary to operate, and the two side frames 5 corresponding to the model of body to be welded are set in a position corresponding to the welding station.

The change of the different types of side frame 5 in the welding station is preferably made in a rapid way. In the case, for example, where it is desired to operate on two different models of body, it may be envisaged that the wheels 7 of the supporting structures are of a pivoting type, to be able to remove each of said structures from its operative position (also manually) and replace it with a structure carrying tooling for clamping suited to a different model of body. Obviously, however, any other technique of replacement of the pair of side frames on which work is being carried out may be used. Finally, not even to be ruled out is the case where each frame 5 is connected in a dismantleable way to the respective supporting structure 6, which even so enables replacement of the pair of side frames 5 so as to adapt the station for operation on a new model of body, for example when a change of production takes place.

As emerges clearly from the foregoing description, the basic advantage of the welding station described above is represented by the extreme structural and operational simplicity.

Of course, without prejudice to the principle of the invention, the details of construction and the embodiments may vary widely with respect to what is described and illustrated herein purely by way of non-limiting example, without thereby departing from the scope of the present invention as defined in the appended claims.

## Claims

1. A welding station for motor-vehicle bodies or sub-assemblies thereof, comprising:
a conveying line (2) for conveying the structures to be welded (3);
- at least one pair of side frames (5) for referencing and clamping of the parts to be welded, arranged at the two sides of the line (2) and displaceable in a direction transverse to the line (2) between an open position and a closed position, each frame (5) comprising devices for referencing and clamping parts to be welded, wherein when the frames are located in their closed position, these devices are able to engage the structure to be welded so as to reference and clamp its parts in the correct welding position; and
- a bottom frame (11) for referencing and support of the structure to be welded (3), which can be displaced with relative motion with respect to the conveying line (2) in the welding station, between a lowered, inoperative, position and a raised, operative, position, in which it receives thereon the structure to be welded,
said welding station being **characterized in that** each side frame (5) and the bottom frame (11) are provided with reciprocal-coupling cam means (12, 13) for causing the aforesaid movement of the bottom frame (11) between its lowered position and its raised position with respect to the line (2) following upon displacement of the side frames (5) between their open position and their closed position,
said reciprocal-coupling cam means comprising a first part (13) and a second part (12), a first part (13) being provided on each frame (5) of the at least one pair of frames (5), and the second part (12) being provided on the bottom frame (11), so as to cooperate with the first part (13) of the cam means provided on each frame (5),
so that when the at least one pair of side frames (5) are displaced transversely with respect to the conveying line (2) from their open position to their closed position, the bottom frame (11) is displaced with respect to the conveying line (2) from its lowered position to its raised position through the coupling between the first and second parts (12,13) of the reciprocal-coupling cam means and viceversa.

2. The welding station according to Claim 1, **characterized in that** each side frame (5) is connected to a mobile supporting structure (6) in a direction transverse to the line (2).

3. The welding station according to Claim 2, **characterized in that** each side frame (5) is connected to the respective supporting structure (6) in a dismantleable way.

4. The welding station according to Claim 2, **characterized in that** each supporting structure is provided with wheels (7) guided on transverse rails (8) fixed to the floor of the station.

5. The welding station according to Claim 4, **characterized in that** each supporting structure (6) of a side frame (5) carries a cam path (13) for engagement of a wheel (12) carried by the aforesaid bottom frame.

6. The welding station according to Claim 5, **characterized in that** the aforesaid cam path (13) is carried by a plate (14) rigidly fixed to the supporting structure (6) of each side frame (5), and **in that** the wheel (12) that engages said cam path (13) is carried by the aforesaid bottom frame (11) in a way freely rotatable about an axis parallel to the longitudinal direction (2).

7. The welding station according to Claim 6, **characterized in that** the transverse movement of the two side frames (5) between their open position and their closed position is controlled by a motor-reducer assembly (9).

8. The welding station according to Claim 7, **characterized in that** said motor-reducer assembly governs a pair of belt drives, which are arranged in a direction transverse to the conveying line (2) and include two endless belts (10), each having a branch carrying an attachment element rigidly connected to a supporting structure (6) of one of the two side frames (5).

9. The welding station according to Claim 8, **characterized in that** the supporting structures (6) of the two side frames (5) are provided with means for clamping the two side frames in their closed position.

10. The welding station according to Claim 9, **characterized in that** said clamping means comprise a disengageable clamping member (31), designed to engage within a seat (32) carried by a supporting structure (6) of a respective side frame.

## Patentansprüche

1. Schweißstation für Kraftfahrzeug-Karosserien oder Untergruppen davon, umfassend:
- eine Förderstrecke (2) zum Fördern der zu schweißenden Anordnungen (3);
- zumindest ein Paar Seitenrahmen (5) zum Beziehen auf und Klemmen der zu schweißenden Teile, die an den zwei Seiten der Strecke (2) angeordnet sind, und versetzbar in einer Richtung quer zu der Strecke (2) zwischen einer offenen Position und einer geschlossenen Position, wobei jeder Rahmen (5) Vorrichtungen zum Bezugnehmen und Klemmen von den zu schweißenden Teilen umfasst, wobei, wenn sich die Rahmen in ihrer geschlossenen Position befinden, diese Vorrichtungen in der Lage sind, in die zu schweißende Struktur einzugreifen, um ihre Teile in der korrekten Schweißposition zu referenzieren und zu klemmen; und
- einen unteren Rahmen (11) zum Bezugnehmen und Unterstützen der zu schweißenden Anordnung (3), welche mit relativer Bewegung in Bezug zu der Förderstrecke (2) in der Schweißstation versetzt werden kann, zwischen einer unteren inoperativen Position und einer erhöhten operativen Position, in welcher sie darauf die zu schweißende Anordnung empfängt,
wobei die Schweißstation **dadurch gekennzeichnet** wird, dass jeder Seitenrahmen (5) und der untere Rahmen (11) mit reziproken Kupplungsnokkenmitteln (12, 13) ausgestattet sind, um die zuvor erwähnte Bewegung des unteren Rahmens (11) zwischen seiner unteren Position und seiner erhöhten Position in Bezug zu der Strecke (2), in Folge der Verschiebung der Seitenrahmen (5) zwischen ihrer offenen Position und ihrer geschlossenen Position zu bewirken,
wobei die reziproken Kupplungsnockenmittel einen ersten Teil (13) und einen zweiten Teil (12) umfassen, wobei ein erstes Teil (13) auf jedem Rahmen (5) des zumindest einen Paars von Rahmen (5) bereitgestellt ist, und der zweite Teil (12) auf dem unteren Rahmen (11) bereitgestellt ist, um mit dem ersten Teil (13) des Nockenmittels zusammenzuarbeiten, welches auf jedem Rahmen (5) bereitgestellt ist,
so dass, wenn das zumindest eine Paar von Seitenrahmen (5) in Bezug zu der Förderstrecke (2) von ihrer offenen Position zu ihrer geschlossenen Position quer versetzt wird, und der untere Rahmen (11) in Bezug zu der Förderstrecke (2) von seiner unteren Position in seine erhöhte Position durch die Kopplung zwischen den ersten und zweiten Teilen (12, 13) der reziproken Kupplungsnockenmittel versetzt wird und umgekehrt.

2. Schweißstation nach Anspruch 1, **dadurch gekennzeichnet, dass** jeder Seitenrahmen (5) mit einer mobilen Unterstützungsstruktur (6) in einer Richtung quer zur Strecke (2) verbunden ist.

3. Schweißstation nach Anspruch 2, **dadurch gekennzeichnet, dass** jeder Seitenrahmen (5) mit der jeweiligen Unterstützungsstruktur (6) abnehmbar verbunden ist.

4. Schweißstation nach Anspruch 2, **dadurch gekennzeichnet, dass** jede Unterstützungsstruktur mit Rädern (7) ausgestattet ist, welche auf Querschienen (8) geführt werden, die auf dem Boden der Station befestigt sind.

5. Schweißstation nach Anspruch 4, **dadurch gekennzeichnet, dass** jede Unterstützungsstruktur (6) eines Seitenrahmens (5) einen Nockenpfad (13) zum Eingreifen eines Rades (12) trägt, welches durch den unteren Rahmen getragen wird.

6. Schweißstation nach Anspruch 5, **dadurch gekennzeichnet, dass** der vorher erwähnte Nockenpfad (13) durch eine Platte (14) getragen wird, welche starr auf der Unterstützungsstruktur (6) jedes Seitenrahmens (5) befestigt ist, und dadurch, dass das Rad (12), welches in dem Nockenpfad (13) eingreift, durch den zuvor erwähnten unteren Rahmen (11) getragen wird, in einer frei um eine Achse parallel zu der längsgerichteten Richtung (2) rotierbaren Art.

7. Schweißstation nach Anspruch 6, **dadurch gekennzeichnet, dass** die Querbewegung der zwei Seitenrahmen (5) zwischen ihrer offenen Position und ihrer geschlossenen Position durch eine Motor-Reduzieranordnung (9) gesteuert wird.

8. Schweißstation nach Anspruch 7, **dadurch gekennzeichnet, dass** die Motor-Reduzieranordnung ein Paar Riemenantriebe führt, welche in einer Richtung quer zur Förderstrecke (2) angeordnet sind und zwei Endlosriemen (10) einschließen, wobei jede eine Abzweigung aufweist, welche ein Befestigungselement trägt, welches starr mit der Unterstützungsstruktur (6) eines der zwei Seitenrahmen (5) verbunden ist.

9. Schweißstation nach Anspruch 8, **dadurch gekennzeichnet, dass** die Unterstützungsstrukturen (6) der zwei Seitenrahmen (5) mit Mitteln zum Klemmen der zwei Seitenrahmen in ihrer geschlossenen Position ausgestattet sind.

10. Schweißstation nach Anspruch 9, **dadurch gekennzeichnet, dass** die Klemmmittel ein außer Eingriff bringbares Klemmbauteil (31) umfassen, welches zum Eingriff innerhalb eines Sitzes (32) gestaltet ist, welcher durch eine Unterstützungsstruktur (6) eines jeweiligen Seitenrahmens getragen wird.

## Revendications

1. Poste de soudure pour carrosseries de véhicules à moteur ou sous-ensembles de celles-ci, comprenant :
- une ligne de convoyage (2) pour acheminer les structures à souder (3) ;
- au moins une paire de cadres latéraux (5) pour référencer et serrer les pièces à souder, agencés sur les deux côtés de la ligne (2) et déplaçables dans une direction transversale à la ligne (2) entre une position ouverte et une position fermée, chaque cadre (5) comprenant des dispositifs pour référencer et serrer les pièces à souder, dans lequel lorsque les cadres sont situés dans leur position fermée, ces dispositifs peuvent se mettre en prise avec la structure à souder de sorte à référencer et serrer ses pièces dans la position de soudage correcte ; et
- un cadre inférieur (11) pour référencer et supporter la structure à souder (3), qui peut être déplacé avec un mouvement relatif par rapport à la ligne de convoyage (2) dans le poste de soudure, entre une position abaissée inopérante et une position relevée opérationnelle, dans laquelle il reçoit la structure à souder,
ledit poste de soudure étant **caractérisé en ce que** chaque cadre latéral (5) et le cadre inférieur (11) sont dotés de moyens de came à couplage réciproque (12, 13) pour causer le mouvement susmentionné du cadre inférieur (11) entre sa position abaissée et sa position relevée par rapport à la ligne (2) se produisant suite au déplacement des cadres latéraux (5) entre leur position ouverte et leur position fermée,
lesdits moyens de came à couplage réciproque comprenant une première partie (13) et une seconde partie (12), une première partie (13) étant prévue sur chaque cadre (5) de l'au moins une paire de cadres (5), et la seconde partie (12) étant prévue sur le cadre inférieur (11), de sorte à coopérer avec la première partie (13) des moyens de came prévus sur chaque cadre (5),
de sorte que lorsque l'au moins une paire de cadres latéraux (5) sont déplacés de façon transversale par rapport à la ligne de convoyage (2) de leur position ouverte à leur position fermée, le cadre inférieur (11) est déplacé par rapport à la ligne de convoyage (2) de sa position abaissée à sa position relevée par le biais du couplage entre les première et seconde parties (12, 13) des moyens de came à couplage réciproque et vice versa.

2. Poste de soudure selon la revendication 1, **caractérisé en ce que** chaque cadre latéral (5) est relié à une structure de support mobile (6) dans une direction transversale à la ligne (2).

3. Poste de soudure selon la revendication 2, **caractérisé en ce que** chaque cadre latéral (5) est relié à la structure de support respective (6) d'une manière démontable.

4. Poste de soudure selon la revendication 2, **caractérisé en ce que** chaque structure de support est dotée de roues (7) guidées sur des rails transversaux (8) fixés au plancher du poste.

5. Poste de soudure selon la revendication 4, **caractérisé en ce que** chaque structure de support (6) d'un cadre latéral (5) porte un trajet de came (13) pour mise en prise d'une roue (12) portée par le cadre inférieur susmentionné.

6. Poste de soudure selon la revendication 5, **caractérisé en ce que** le trajet de came susmentionné (13) est porté par une plaque (14) fixée solidement à la structure de support (6) de chaque cadre latéral (5), et **en ce que** la roue (12) qui se met en prise avec ledit trajet de came (13) est portée par le cadre inférieur susmentionné (11) d'une manière librement rotative sur un axe parallèle à la direction longitudinale (2).

7. Poste de soudage selon la revendication 6, **caractérisé en ce que** le mouvement transversal des deux cadres latéraux (5) entre leur position ouverte et leur position fermée est contrôlé par un ensemble motoréducteur (9).

8. Poste de soudure selon la revendication 7, **caractérisé en ce que** ledit ensemble motoréducteur gouverne une paire d'entraînements par courroie, qui sont agencés dans une direction transversale à la ligne de convoyage (2) et comprennent deux courroies sans fin (10), ayant chacune une branche portant un élément de fixation relié solidement à une structure de support (6) de l'un des deux cadres latéraux (5).

9. Poste de soudure selon la revendication 8, **caractérisé en ce que** les structures de support (6) des deux cadres latéraux (5) sont dotées de moyens pour serrer les deux cadres latéraux dans leur position fermée.

10. Poste de soudure selon la revendication 9, **caractérisé en ce que** lesdits moyens de serrage comprennent un élément de serrage désengageable (31), conçu pour se mettre en prise à l'intérieur d'un siège (32) porté par une structure de support (6) d'un cadre latéral respectif.
